# EUROPÄISCHE PATENTSCHRIFT

(11) **EP 1 362 331 B1**
(45) Veröffentlichungstag und Bekanntmachung des Hinweises auf die Patenterteilung: **30.03.2005**
(21) Anmeldenummer: 02712863.6
(22) Anmeldetag: 28.01.2002
(51) Int. Cl.: G07D 11/00, G07D 7/04, G01N 27/90

(54) **VORRICHTUNG ZUR ENTGEGENNAHME VON BANKNOTEN**
DEVICE FOR ACCEPTING BANKNOTES
DISPOSITIF DE RECEPTION DE BILLETS DE BANQUE

(30) Priorität: 05.02.2001 DE 10105082
(43) Veröffentlichungstag der Anmeldung: 19.11.2003
(60) Teilanmeldung: 04025818.8
(73) Patentinhaber: Wincor Nixdorf International GmbH, 33106 Paderborn (DE)
(72) Erfinder: LANDWEHR, Martin, 33100 Paderborn (DE); ADEMMER, Heinz, 59590 Geseke (DE); BECKER, Rainer, 66399 Mandelbachtal (DE); BOTH, Norbert, 66636 Tholey (DE); KISELMANN, Ifrit, 66640 Bliekastel (DE); RODNER, Christoph, 66280 Sulzbach (DE); YASHAN, Andriy, 66125 Saarbrücken (DE)
(74) Vertreter: Schaumburg, Thoenes, Thurn, Landskron
(86) Internationale Anmeldenummer: PCT/EP2002/000866
(87) Internationale Veröffentlichungsnummer: WO 2002/063572

(56) Entgegenhaltungen:
- WO-A-99/24939
- DE-A- 3 837 239
- DE-A- 19 908 360
- PATENT ABSTRACTS OF JAPAN vol. 1998, no. 12, 31. Oktober 1998 (1998-10-31) & JP 10 197492 A (TOSHIBA CORP), 31. Juli 1998 (1998-07-31)
- PATENT ABSTRACTS OF JAPAN vol. 1998, no. 07, 31. März 1998 (1998-03-31) & JP 01 099195 A (OKI ELECTRIC IND CO LTD), 18. April 1989 (1989-04-18)

## Beschreibung

Die Erfindung betrifft eine Vorrichtung zur Entgegennahme von Banknoten, gemäß dem Oberbegriff des Anspruches 1.

Die mechanischen Einrichtungen innerhalb eines Geldautomaten sind hochentwickelte komplexe Komponenten, die sorgfältig hergestellt und justiert sind, um einzelne Banknoten mit hoher Taktfrequenz prüfen, sortieren, zählen und transportieren zu können. Entsprechend empfindlich reagieren diese mechanischen Einrichtungen auf Fremdkörper, insbesondere Metallgegenstände, wie Büroklammern, Stecknadeln, Münzen oder dergleichen. Es muß daher verhindert werden, daß solche Fremdkörper zusammen mit den Banknoten in das Gerät gelangen.

Eine Vorrichtung der eingangs genannten Art ist aus der DE 38 37 239 A1 bei einer Sortiervorrichtung für Banknoten bekannt. Dabei sind die Banknoten zwischen zwei Klemmplatten gehalten, von denen eine eine Leiterplatte mit dem Wirbelstromsensor trägt.

Der Erfindung liegt die Aufgabe zugrunde, eine Vorrichtung der vorstehend genannten Art auszubilden, mit der eine hochempfindliche Abtastung flächiger Gegenstände, wie Banknoten, möglich ist, damit eine Beschädigung mechanischer Komponenten in dem Gerät durch metallische Fremdkörper vermieden werden kann.

Diese Aufgabe wird erfindungsgemäß durch die im Anspruch 1 angegebenen Merkmale gelöst.

Wenn die Sensoranordnung metallische Gegenstände an dem eingelegten Banknotenbündel entdeckt, wird das Einziehen der Banknoten unterbrochen oder gar nicht erst begonnen.

Der Kunde kann aufgefordert werden, die Banknoten noch einmal auf Fremdgegenstände zu überprüfen.

Der Wirbelstromsensor umfaßt einen Oszillator, dessen Schwingung durch Wirbelströme, die in einem in der Nähe befindlichen Metallgegenstand induziert werden, gedämpft und in der Phase verschoben wird. Diese Änderungen der Schwingung-Kenngrößen können als Störsignale ausgewertet werden.

Der eingesetzte Wirbelstromsensor besteht aus einer stromdurchflossenen Spule, die auf einem metallischen Trägerblech angeordnet ist. Bei geeigneter Auslegung ergeben sich über die induktive Wechselwirkung beider Komponenten die gewünschten Eigenschaften des Sensors. Die Wirkung eines flächig ausgedehnten Leiters auf die magnetische Feldverteilung einer stromdurchflossenen Spule, die sich über dem Leiter befindet, ist abhängig von dessen elektrischen und magnetischen Eigenschaften. Aus der Spiegelungsmethode ergibt sich, daß die Feldverteilung dieser Anordnung identisch ist mit derjenigen der gleichen Spule und einer an der Grenzfläche des Leiters gespiegelten Spule. Die Anordnung einer Spule im Abstand Δ über einem flächigen Leiter wird ersetzt durch die Anordnung zweier Spulen im Abstand 2Δ mit gleicher Geometrie, gleicher Stromamplitude und einer Stromphase, die von den elektrischen und magnetischen Eigenschaften des flächigen Leiters abhängt. Damit die Randbedingungen, die aus den Maxwell-Gleichungen folgen, für die Tangentialkomponente der elektrischen Feldstärke an der Grenzfläche erfüllt sind, muß im Grenzfall des idealen Leiters (Leitfähigkeit σ→∞) die Stromrichtung in der gespiegelten Spule entgegengesetzt zur Richtung in der ursprünglichen Spule sein. Die mit den Strömen verketteten Magnetfelder schwächen sich gegenseitig. Das Gesamtfeld verschwindet bei abnehmendem Abstand Δ→0. Im anderen Grenzfall des idealen magnetischen Leiters (magnetische Permeabilität µᵣ→∞), muß die Stromrichtung in der gespiegelten Spule mit derjenigen in der Originalspule übereinstimmen, damit die Randbedingungen für die Tangentialkomponente der magnetischen Feldstärke an der Grenzfläche des Leiters erfüllt sind. Die mit den Strömen verketteten Magnetfelder verstärken sich in Vorwärtsrichtung. Das Gesamtfeld verdoppelt sich bei abnehmendem Abstand Δ→0 und löscht sich in Rückwärtsrichtung aus.

Eine als Wirbelstromsensor geeignete Anordnung der dargestellten Art erfordert also ein Spiegelmaterial mit hoher Permeabilität und geringer Leitfähigkeit. Gesinterte Ferrite sind diesbezüglich gut geeignet. Jedoch sind diese meist nur in Zylinder- oder Ringform, selten in flächiger Form verfügbar. Darüber hinaus sind sie spröde, wenig robust und mechanisch schlecht zu bearbeiten. Mu-Metalle oder weichmagnetischer ferritischer Stahl stellt einen guten Kompromiss bezüglich Meßempfindlichkeit, Bearbeitbarkeit, Verfügbarkeit und Kosten dar. In diesem Fall ist die Gleichphasigkeit des Wechselstroms in der Spule und ihrem Spiegelbild nicht exakt erfüllt. Bei geeigneter Wahl der Frequenz des Spulenstroms liegt das Verhältnis der Wirkung von Leitfähigkeit und Permeabilität trotzdem deutlich auf Seite der Permeabilität, so daß sich eine konstruktive Überlagerung der beiden Magnetfeldanteile und somit eine Verstärkung der Meßempfindlichkeit in Vorwärtsrichtung ergibt.

Die erfindungsgemäße Anordnung eignet sich insbesondere zur hochempfindlichen Abtastung flächiger Gegenstände wie Banknoten. Die Meßspule und die Kompensationsspule sollten dabei weit genug auseinander liegen, daß sie durch Fremdgegenstände wie Büroklammern und dergleichen nicht in der gleichen Weise beeinflußt werden, so daß man bei Vorhandensein eines Metallgegenstandes ein deutliches Differenzsignal zwischen der Meßspule und der Kompensationsspule erhält, das sich auswerten läßt.

Vorzugsweise hat die Sensoranordnung eine Mehrzahl von Meßspulen und diesen zugeordneten Kompensationsspulen, die über die Trägerplatte verteilt angeordnet sind, wobei jeweils eine Meßspule und eine mit ihr identische Kompensationsspule durch eine Multiplexerschaltung nacheinander mit dem Oszillator und der Auswerteschaltung verbindbar sind. Dadurch erhält man eine großflächige Sensoranordnung, die eine Überwachung der gesamten Fachwand ermöglicht.

Die Trägerplatte besteht mindestens auf ihrer den Spulen zugewandten Oberfläche aus einem Material hoher Permeabilität, beispielsweise einem mu-Metall oder einem weichmagnetischen ferritischen Stahl. Die Trägerplatte kann als Ganzes aus diesen Materialien bestehen. Sofern dies nicht möglich ist, genügt es aber auch, wenn auf ein anderes metallisches Material eine dünne Folie aus dem Material hoher Permeabilität gelegt wird.

Die Spulen sollten möglichst flach sein und sind daher zweckmäßigerweise einlagig aus Drahtwicklung oder in lithographischer Ätztechnik hergestellt und beispielsweise auf die Trägerplatte aufgeklebt oder auf eine Folie gedruckt, die dann auf die Trägerplatte aufgeklebt wird.

Die Trägerplatte mit den Spulen ist zweckmäßigerweise parallel zur Oberfläche eines im Fach liegenden Banknotenbündels. Beispielsweise kann die Trägerplatte selbst von der Banknotenrückhalteplatte gebildet sein, durch die die Abzugselemente des Vereinzelungsmechanismus greifen. Die metallische Trägerplatte schirmt dabei die Spulenanordnung gegen elektromagnetische Störsignale aus dem Geräteinnerem ab.

Die Anordnung kann aber auch so getroffen sein, daß die oder eine weitere die Meß- und Kompensationsspulen tragende Trägerplatte quer zur Oberfläche des Banknotenbündels gerichtet ist. Hat man zwei annähernd senkrecht zueinander gerichtete Trägerplatten, so können die von den Spulen auf diesen Trägerplatten gewonnenen Signale gemeinsam ausgewertet werden, um so die Empfindlichkeit der Sensoranordnung gegenüber Metallgegenständen im Aufnahmefach zu erhöhen.

Zweckmäßigerweise wird die Taktgeschwindigkeit der Sensorabfrage mit der Abzugsgeschwindigkeit des Vereinzelungsmechanismus koordiniert und zwar so, daß pro abgezogene Banknote sämtliche Spulenpaare der Sensoranordnung abgetastet werden. Damit ist sichergestellt, daß vor dem Einzug einer Banknote der gesamte von der Sensoranordnung zu erfassende Raum überprüft wurde.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Darin zeigen:
- Figur 1: eine schematische Seitenansicht eines Banknotenaufnahmefaches eines Geldautomaten,
- Figur 2: eine schematische Draufsicht auf eine Trägerplatte mit einer Meßspule und einer Kompensationsspule der erfindungsgemäßen Sensoranordnung und
- Figur 3: ein Prinzipschaltbild der Sensoranordnung mit Oszillator und Auswerteschaltung,

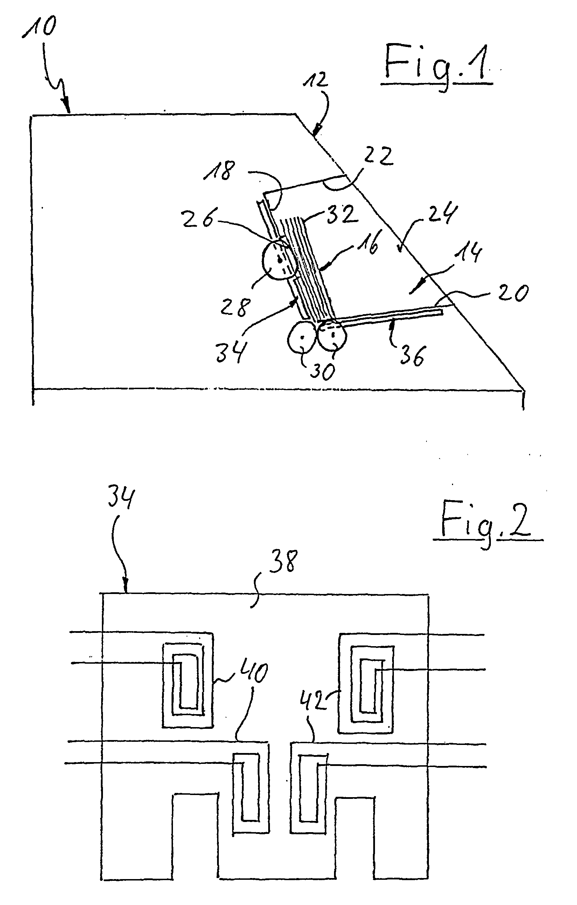

In Figur 1 ist mit 10 das Gehäuse eines Geldautomaten bezeichnet, der zur Entgegennahme von Banknoten geeignet ist. Der Geldautomat kann im übrigen in irgendeiner bekannten Weise ausgebildet sein und braucht hier nicht näher erläutert zu werden. Innerhalb des Bedienungsfeldes 12 des Geldautomaten ist ein Aufnahmefach 14 zum Einlegen eines Banknotenbündels 16 ausgebildet. Das Aufnahmefach 14 hat eine Rückwand 18, einen Boden 20, eine Deckfläche 22 und zwei Seitenwände 24, von denen hier nur eine dargestellt ist. Das Banknotenbündel 16 wird so eingelegt, daß es auf dem Boden 20 hochkant steht und flach an der Rückwand 18 anliegt. Die Rückwand 18 hat Durchbrechungen 26, durch die Abzugsrollen 28 greifen, die im Zusammenwirken mit Vereinzelungsrollen 30 eines Vereinzelungsmechanismus die einzelnen Banknoten 32 des Banknotenbündels 16 einzeln abziehen und der Verarbeitung in dem Geldautomaten zuführen.

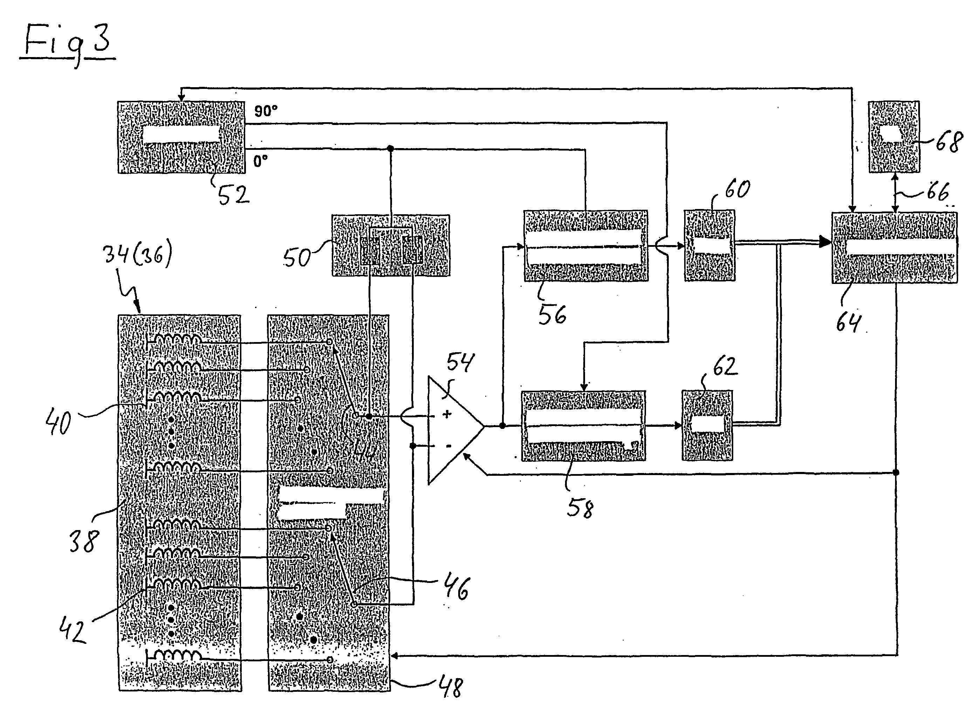

In der Praxis hat sich gezeigt, daß sich an den Banknoten häufig Büroklammern oder Stecknadeln befinden, mit denen die Banknoten zusammengeheftet sind und die zu Schäden in den Prüf- und Verarbeitungseinrichtungen innerhalb des Geldautomaten führen können. Daher muß verhindert werden, daß diese Gegenstände in den Geldautomaten gelangen. Hierzu ist an der Rückwand 18 und auch an dem Boden 20 eine flächige Sensoranordnung 34 bzw. 36 parallel zur Rückwand 18 bzw. zum Boden 20 angeordnet, die nun anhand der Figuren 2 und 3 näher erläutert werden soll.

Die Sensoranordnung umfaßt eine Trägerplatte 38, die aus einem Metall hoher Permeabilität wie beispielsweise einem mu-Metall oder weichmagnetischen ferritischen Stahl besteht oder zumindest mit einer dünnen Schicht eines solchen Metalles bedeckt ist. Für die Empfindlichkeit der Sensoranordnung am besten wäre eine Trägerplatte aus Ferrit. Jedoch ist dieses Material in der Regel in Plattenform nicht verarbeitbar oder in Geräten wie in einem Geldautomaten einsetzbar. Auf der Trägerplatte befinden sich mindestens zwei, vorzugsweise jedoch zwei paarweise gleiche flächige Spulen, sogenannte Pfannkuchenspulen, die in Form einer einzigen Drahtwicklung oder als gedruckte Spulen auf der Trägerplattenoberfläche angeordnet werden. Die Spulen können z.B. aufgeklebt oder auf eine Folie gedruckt werden, die dann ihrerseits auf der Trägerplatte befestigt wird. Jeweils zwei voneinander beabstandete Spulen sollten identisch ausgebildet sein. Eine der Spulen bildet jeweils eine Meßspule während die andere als Kompensationsspule bezeichnet wird, wobei sich Meßspule und Kompensationsspule physikalisch gleich sind.

Wie die Figur 3 zeigt, ist die Gruppe der Meßspulen 40 mit einem ersten Schalter 44 und die Gruppe der Kompensationsspulen 42 mit einem zweiten Schalter 46 eines Multiplexers 48 verbunden. Über die Schalter 44 und 46 können die Meßspulen 40 bzw. 42 paarweise mit einer Stromquelle 50 und einem Oszillator 52 sowie dem nichtinvertierenden und invertierenden Eingang eines Differenzverstärkers 54 verbunden werden. Der Ausgang des Differenzverstärkers 54 ist mit zwei Gleichrichterschaltungen für eine phasenselektive Gleichrichtung 56 bzw. 58 verbunden, denen ferner das Oszillatorsignal bzw. das um 90° phasenverschobene Oszillatorsignal zugeführt wird. Der Ausgang der Gleichrichterschaltungen 56 bzw. 58 ist jeweils über einen AD-Wandler 60 bzw. 62 mit einem Mikrocontroller 64 verbunden, der einerseits den Differenzverstärker 54 und andererseits den Multiplexer 48 steuert und über eine Schnittstelle 66 mit einem PC 68 in Verbindung steht. Ferner ist der Mikrocontroller mit dem Oszillator 52 verbunden, um dessen Frequenz einstellen zu können.

Wird die Sensoranordnung mit den Meßspulen 40, 42 aktiviert, so schalten die Schalter 44, 46 des Multiplexers 48 nacheinander jeweils ein eine Meßspule 40 und eine Kompensationsspule 42 umfassendes Spulenpaar aktiv. Befindet sich im Fach, d.h. an den Banknoten 32 des Banknotenbündels 16 ein metallischer Gegenstand, so werden Amplitude und Phase der Schwingungen in den Spulen 40, 42 durch die in dem metallischen Gegenstand induzierten Wirbelströme verändert. Das Meßsignal trägt sowohl Amplituden- als auch Phaseninformation. die mittels Phasenselektion dazu benutzt werden kann, die Signalbeiträge der verschiedenen Metallteile (Masse, Material) von denjenigen zu unterscheiden, die durch Temperatureinflüsse auf die Sensoranordnung und die Prüfelektronik hervorgerufen werden.

Elektromagnetische Störeinkopplungen in die Sensoranordnung in Folge von elektrischen Schaltvorgängen innerhalb des Geldautomaten können durch schmalbandige Filterung der Wirbelstromsignale und die Differenzschaltung der Spulen 40 und 42 unterdrückt werden.

Ergibt die Auswertung der an den Spulen 40 und 42 auftretenden Differenzsignale, daß sich ein Metallgegenstand in dem Aufnahmefach befinden muß, so wird der laufende Einzug unterbrochen oder der Einzug gar nicht erst begonnen. Dem Kunden wird angezeigt, daß er die Banknoten noch einmal entnehmen und auf vorhandene Metallteile überprüfen soll.

Die Empfindlichkeit der Sensoranordnung kann noch dadurch gesteigert werden, daß neben der Sensoranordnung 34 an der Rückwand 18 auch die Sensoranordnung 36 am Boden 20 des Aufnahmefaches 14 vorhanden ist. Die Signale der Sensoranordnung 36 können für sich ausgewertet werden oder mit den Signalen der Sensoranordnung 34 verglichen werden, um so weitere Kriterien für das Vorhandensein von Metallgegenständen im Aufnahmefach 14 zu schaffen.

Die Taktgeschwindigkeit, mit der der Multiplexer 48 die Meß- und Kompensationsspulen abtastet, ist zweckmäßigerweise an die Einzugsgeschwindigkeit der Banknoten 32 angepaßt, so daß sichergestellt ist, daß pro Banknote die gesamte Sensoranordnung abgefragt wurde.

### Bezugszeichenliste

- 10: Gehäuse
- 12: Bedienungsfeld
- 14: Aufnahmefach
- 16: Banknotenbündel
- 18: Rückwand
- 20: Boden
- 22: Deckfläche
- 24: Seitenwände
- 26: Durchbrechung
- 28: Abzugsrolle
- 30: Vereinzelungsrollen
- 32: Banknoten
- 34: Sensoranordnung
- 36: Sensoranordnung
- 38: Trägerplatte
- 40: Meßspule
- 42: Kompensationsspule
- 44: 1. Schalter
- 46: 2. Schalter
- 48: Multiplexer
- 50: Stromquelle
- 52: Oszillator
- 54: Differenzverstärker
- 56: phasenselektiver Gleichrichter
- 58: phasenselektiver Gleichrichter
- 60: AD-Wandler
- 62: AD-Wandler
- 64: Mikrocontroller
- 66: Schnittstelle
- 68: PC

## Patentansprüche

1. Vorrichtung zur Entgegennahme von Banknoten, Scheckformularen und dergleichen, insbesondere Geldautomat, mit einem Fach (14) zur Aufnahme eines Banknotenbündels (16) und einem Vereinzelungsmechanismus (28, 30) zum Abziehen einzelner Banknoten (32) von dem Bündel (16), wobei entlang mindestens einer der das Fach (14) begrenzenden Wände (18, 20, 22, 24) eine Sensoranordnung (34, 36) zum Erfassen von mit den Banknoten (32) verbundenen metallischen Fremdkörpern angeordnet ist und die Sensoranordnung (34, 36) als Wirbelstromsensor ausgebildet ist, **dadurch gekennzeichnet, dass** die Sensoranordnung (34, 36) ein Spulenpaar bestehend aus einer Messspule (40) und einer bezüglich ihrer elektrischen Eigenschaften mit dieser identisch ausgebildete Kompensationsspule (42) hat, die in einem Abstand voneinander flächig an einer das Fach (14) begrenzenden metallischen Trägerplatte (38) angeordnet und mit einer Stromquelle (50) einem Oszillator (52) sowie einem Differenzverstärker (54) verbunden sind.

2. Vorrichtung nach Anspruch 1, **dadurch gekennzeichnet, dass** die Sensoranordnung (34, 36) eine Mehrzahl von Spulenpaaren bestehend aus einer Messspule (40) und einer zugeordneten Kompensationsspule (42) hat, die über die Trägerplatte (38) verteilt angeordnet sind, wobei jeweils eine Messspule (40) und eine mit ihr identische Kompensationsspule (42) durch eine Multiplexerschaltung (48) nacheinander mit dem Oszillator (52) und dem Differenzverstärker (54) verbindbar sind.

3. Vorrichtung nach Anspruch 2, **dadurch gekennzeichnet, dass** die Trägerplatte (38) parallel zur Oberfläche eines im Fach (14) liegenden Banknotenbündels (16) ist.

4. Vorrichtung nach Anspruch 3, **dadurch gekennzeichnet, dass** die Trägerplatte (18) von der Banknotenrückhalteplatte gebildet ist, durch die die Abzugselemente (28) des Vereinzelungsmechanismus greifen.

5. Vorrichtung nach einem der Ansprüche 1 bis 4, **dadurch gekennzeichnet, dass** die oder eine weitere Trägerplatte (38) mit Mess- und Kompensationsspulen (40, 42) quer zur Oberfläche des Banknotenbündels (16) gerichtet ist.

6. Vorrichtung nach einem der Ansprüche 1 bis 5, **dadurch gekennzeichnet, dass** die Trägerplatte (38) mindestens an ihrer den Spulen (40, 42) zugewandten Oberfläche aus einem Material hoher Permeabilität besteht.

7. Vorrichtung nach Anspruch 6, **dadurch gekennzeichnet, dass** das Material hoher Permeabilität ein mu-Metall ist.

8. Vorrichtung nach Anspruch 6, **dadurch gekennzeichnet, dass** das Material hoher Permeabilität ein weichmagnetischer ferritischer Stahl ist.

9. Vorrichtung nach einem der Ansprüche 1 bis 8, **dadurch gekennzeichnet, dass** die Spulen (40, 42) einlagig als Drahtwicklung oder in lithographischer Ätztechnik hergestellt sind.

10. Vorrichtung nach einem der Ansprüche 1 bis 9, **dadurch gekennzeichnet, dass** die Spulen auf eine Folie aufgeklebt sind, die auf die Trägerplatte (38) aufgeklebt ist.

11. Vorrichtung nach einem der Ansprüche 1 bis 10, **dadurch gekennzeichnet, dass** die Spulen auf die Trägerplatte (38) aufgeklebt sind.

12. Vorrichtung nach einem der Ansprüche 1 bis 11, **dadurch gekennzeichnet, dass** die Taktgeschwindigkeit der Sensorabfrage mit der Abzugsgeschwindigkeit des Vereinzelungsmechanismus (28, 30) koordiniert ist.

## Claims

1. A device for accepting bank notes, check forms and the like, in particular an automatic money machine, with a compartment (14) for receiving a banknote bundle (16) and a separating mechanism (28, 30) for drawing off individual banknotes (32) from the bundle (16), a sensor arrangement (34, 36) for detecting metallic foreign bodies connected with the banknotes (32) being arranged along at least one of the walls (18, 20, 22, 24) bounding the compartment (14), said sensor arrangement being designed as an eddy current sensor, **characterized in that** the sensor arrangement (34, 36) comprises a coil pair consisting of a measuring coil (40) and a compensation coil (42) formed so as to be identical to the measuring coil in respect to its electrical properties, which are arranged flatly on a metallic carrier plate (38) bordering the compartment (14) and spaced from one another and connected with a current source (50), an oscillator (52) as well as with a differential amplifier (54).

2. The device according to claim 1, **characterized in that** the sensor arrangement (34, 36) has a plurality of coil pairs consisting of a measuring coil (40) and a compensation coil (42) associated with the measuring coil, which are arranged in distributed fashion over the carrier plate (38) with each measuring coil (40) and a compensation coil (42) identical to it being connectable in sequence with the oscillator (52) and the differential amplifier (54) through a multiplexer circuit (48).

3. The device according to claim 2, **characterized in that** the carrier plate (38) is parallel to the surface of a banknote bundle (16) lying in the compartment (14).

4. The device according to claim 3, **characterized in that** the carrier plate (18) is formed by the banknote retaining plate through which the drawing-off elements (28) of the separating mechanism extend.

5. The device according to one of the claims 1 to 4, **characterized in that** the or another carrier plate (38) with measuring and compensation coils (40, 42) is arranged transversely to the surface of the banknote bundle (16).

6. The device according to one of the claims 1 to 5, **characterized in that** the carrier plate (38) at least on its surface facing the coils (40, 42) is made of a material of high permeability.

7. The device according to claim 6, **characterized in that** the material of high permeability is a mu-metal.

8. The device according to claim 6, **characterized in that** the material of high permeability is a soft magnetic ferrite steel.

9. The device according to one of the claims 1 to 8, **characterized in that** the coils (40, 42) are made in one layer as wire windings or by a lithographic etching technique.

10. The device according to one of the claims 1 to 9, **characterized in that** the coils are adhesively attached to a foil, which foil is adhesively attached to the carrier plate (38).

11. The device according to one of the claims 1 to 10, **characterized in that** the coils are adhesively attached to the carrier plate (38).

12. The device according to one of the claims 1 to 11, **characterized in that** the clock speed of the sensor polling is coordinated with the draw-off speed of the separating mechanism (28, 30).

## Revendications

1. Dispositif de réception de billets de banque, de formules de chèques et analogues, notamment distributeur automatique de billets, comprenant un casier (14) de réception d'une liasse (16) de billets et un mécanisme (28, 30) de déliassage pour retirer des billets (32) individuels de la liasse (16), un dispositif (34, 36) capteur de détection de corps métalliques étrangers relié aux billets (32) étant disposé le long d'au moins l'une des parois (18, 20, 22, 24) délimitant le casier et le dispositif (34, 36) de capteur étant constitué en capteur à courant de Foucault, **caractérisé en ce que** le dispositif (34, 36) capteur a une paire de bobines constituée d'une bobine (40) de mesure et d'une bobine (42) de compensation constituée de manière identique à la bobine (40) de mesure en ce qui concerne ses propriétés électriques, qui sont disposées à distance l'une de l'autre à plat sur une plaque (38) métallique support délimitant le casier (14) et qui sont reliées à une source (50) de courant, à un oscillateur (52) ainsi qu'à un amplificateur (54) différentiel.

2. Dispositif suivant la revendication 1, **caractérisé en ce que** le dispositif (34, 36) capteur a une multiplicité de paires de bobines constituées d'une bobine (40) de mesure et d'une bobine (42) de compensation associées, qui sont réparties sur la plaque (38) support, respectivement une bobine (40) de mesure et une bobine (42) de compensation qui lui est identique pouvant être reliées par un circuit (48) de multiplexage l'une après l'autre à l'oscillateur (52) et à l'amplificateur (54) différentiel.

3. Dispositif suivant la revendication 2, **caractérisé en ce que** la plaque (38) support est parallèle à la surface d'une liasse (16) de billets reposant dans le casier (14).

4. Dispositif suivant la revendication 3, **caractérisé en ce que** la plaque (18) support est formée par la plaque de retenue de billets, par laquelle s'étendent les éléments (28) de retrait du mécanisme de déliassage.

5. Dispositif suivant l'une des revendications 1 à 4, **caractérisé en ce que** la ou une autre plaque (38) support ayant les bobines (40, 42) de mesure et de compensation est dirigée transversalement à la surface de la liasse (16) de billets.

6. Dispositif suivant l'une des revendications 1 à 5, **caractérisé en ce que** la plaque (38) support est au moins sur sa surface tournée vers les bobines (40, 42), en un matériau de grande perméabilité.

7. Dispositif suivant la revendication 6, **caractérisé en ce que** le matériau de grande perméabilité est un métal mu.

8. Dispositif suivant la revendication 6, **caractérisé en ce que** le matériau de grande perméabilité est un acier ferritique à magnétisme doux.

9. Dispositif suivant l'une des revendications 1 à 8, **caractérisé en ce que** les bobines (40, 42) sont fabriquées en une seule couche sous la forme d'un enroulement de fil ou suivant une technique d'attaque lithographique.

10. Dispositif suivant l'une des revendications 1 à 9, **caractérisé en ce que** les bobines sont collées sur une feuille, qui est collée sur la plaque (38) support.

11. Dispositif suivant l'une des revendications 1 à 10, **caractérisé en ce que** les bobines sont collées sur la plaque (38) support.

12. Dispositif suivant l'une des revendications 1 à 11, **caractérisé en ce que** la vitesse de cadencement de l'interrogation par le capteur est coordonnée à la vitesse de retrait du mécanisme (28, 30) de déliassage.
